# DEMANDE DE BREVET EUROPEEN

(11) **EP 3 366 393 A1**
(43) Date de publication de la demande: **29.08.2018**
(21) Numéro de dépôt: 18158866.6
(22) Date de dépôt: 27.02.2018
(51) Int. Cl.: B22F 3/105, F16C 32/06, F16C 33/12, B33Y 10/00, B33Y 80/00, B22F 5/10, B33Y 30/00

(54) **MÉTHODE DE FABRICATION D'UN CORPS DE PALIER AVEC UNE POROSITÉ CONTRÔLÉE POUR UN PALIER AÉROSTATIQUE**

(30) Priorité: 28.02.2017 CH 232017
(71) Demandeur: Kummer Frères SA, Fabrique de machines, 2720 Tramelan (CH)
(72) Inventeur: Roquier, François, 2720 Tramelan (CH)
(74) Mandataire: P&TS SA (AG, Ltd.)

(57) **Abrégé**

La présente invention concerne une méthode de fabrication d'un corps de palier (31) pour un palier aérostatique, le corps de palier comportant une porosité contrôlée permettant le passage d'un fluide sous pression, dans laquelle le corps de palier (31) est fabriqué par un procédé de fabrication additive. La présente invention concerne également un corps de palier (31) fabriqué avec la méthode. La solution proposée présente notamment l'avantage de pouvoir fabriquer un corps de palier ayant une porosité traversante bien contrôlée.

## Description

### Domaine technique

La présente invention concerne une méthode de fabrication d'un corps de palier pour un palier aérostatique, le corps de palier comportant une porosité contrôlée permettant le passage d'un fluide sous pression. L'invention concerne également un corps de palier fabriqué avec la méthode.

### Etat de la technique

Les paliers tournants sont utilisés pour maintenir un arbre sur un axe, tandis que l'arbre tourne autour de l'axe. Par exemple un palier rotatif peut être constitué d'un corps de palier cylindrique creux et d'un arbre tournant à l'intérieur du corps de palier. L'arbre doit être maintenu à une distance constante du corps de palier lorsqu'il tourne.

Des paliers rotatifs connus utilisent une pluralité de billes disposées entre le corps de palier et l'arbre. Les billes ont un diamètre qui est égal à la distance entre corps de palier et l'arbre afin de permettre une rotation à faible frottement de l'arbre à l'intérieur du corps de palier. Les billes peuvent être remplacées par des rouleaux ou autres moyens de guidage. Des lubrifiants sont nécessaires afin réduire la friction entre le corps de palier et l'arbre et pour le refroidissement, lorsque l'arbre tourne.

Un palier aérostatique est un palier sans contact entre le corps de palier et l'arbre. Dans un palier aérostatique, de l'air sous pression agit comme coussin d'air séparant la surface du corps de palier et la surface de l'arbre, en mouvement relatif l'une par rapport à l'autre. Dans un palier aérostatique, un film d'un fluide sous pression, tel que l'air, est intercalé entre la surface du corps de palier et la surface de l'arbre, permettant de ne pas avoir de contact entre ces deux surfaces.

Dans les paliers fluides connus, un fluide sous pression est injecté entre un arbre tournant et un corps du palier à travers des orifices ayant des diamètres généralement supérieurs à 100 µm, en raison des difficultés de fabrication croissante de manière exponentielle lorsqu'on diminue le diamètre des orifices en-deçà de cette limite.

Il est donc important de pouvoir fabriquer un corps du palier possédant une porosité contrôlée, afin d'assurer une meilleure distribution et une taille réduite des orifices d'un restricteur d'entrée, ce qui permet d'augmenter la rigidité du palier sans modifier ses dimensions. Cela permet également de mieux maitriser la consommation du fluide (par exemple de l'air).

Le fait de pouvoir varier la porosité dans la section du restricteur d'entrée permet, par exemple, de générer des micro poches en surface, favorables à une meilleure maitrise de la stabilité du palier à des rigidités élevées.

### Bref résumé de l'invention

La présente invention concerne une méthode de fabrication d'un corps de palier pour un palier aérostatique, le corps de palier comportant une porosité contrôlée permettant le passage d'un fluide sous pression, dans laquelle le corps de palier est fabriqué par un procédé de fabrication additive.

Le procédé de fabrication additive peut comprendre un procédé de fusion laser sélective, un procédé de frittage laser direct, un procédé de déposition de fil en fusion, la stéréolithographie, la fusion par projection de poudre ou la polymérisation et réticulation par ultra-violet (UV).

Dans un mode de réalisation, la porosité est ajustée en variant au moins l'un des paramètres suivants ou une combinaison de ces paramètres: la puissance du laser, l'épaisseur de la couche déposée, la résolution, c'est-à-dire le diamètre, du faisceau laser, la vitesse de balayage du laser ou le temps de fusion.

Dans un autre mode de réalisation, une succession de couches sont formées, chaque couche formant une structure tridimensionnelle de sorte que la succession de couches forme des pores traversants.

Cette solution présente notamment l'avantage par rapport à l'art antérieur de pouvoir fabriquer un corps de palier ayant une porosité traversante bien contrôlée. En particulier, la méthode de fabrication additive permet de mieux contrôler la taille et une géométrie des pores ainsi que la distribution des pores sur le corps de palier, par rapport aux méthodes de fabrications conventionnelles. La méthode de fabrication additive permet également d'obtenir des pores ayant un rapport d'aspect élevé, c'est-à-dire un rapport hauteur/largeur élevé.

Lorsque le corps du palier est fabriqué dans un matériau comprenant un métal ou un alliage métallique, ce dernier présente également de bonnes propriétés tribologiques, une bonne résistance mécanique, une dureté élevée et une bonne résistance à la corrosion.

### Brève description des figures

Des exemples de mise en oeuvre de l'invention sont indiqués dans la description illustrée par les figures annexées dans lesquelles :
la figure 1 montre une représentation schématique d'un palier aérostatique vu en coupe;
la figure 2 montre une vue en section du palier;
les figures 3a et 3b représentent schématiquement un procédé de fusion laser sélective et frittage sélectif au laser;
les figures 4 et 5 illustrent la fabrication d'un corps de palier poreux à l'aide d'un procédé de fusion laser sélective pendant une étape de déposition (figure 4) et après un étape de dissolution (figure 5), selon un mode de réalisation; et
la figure 6 montre une vue en coupe d'un palier comprenant un rail de guidage guidant un chariot mobile

### Exemple(s) de mode de réalisation

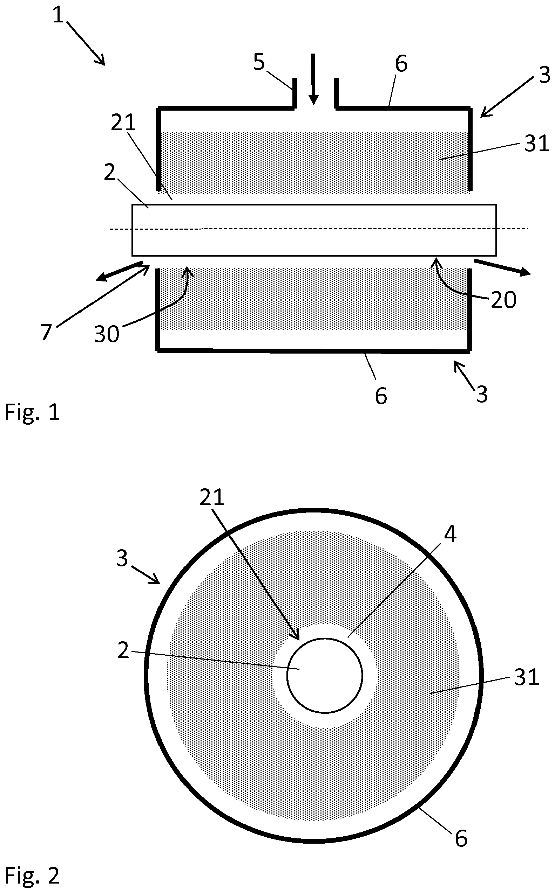

La figure 1 montre une représentation schématique d'un palier 1 aérostatique vu en coupe et la figure 2 montre une section du palier 1. Le palier 1 comprend un arbre 2 dont au moins une portion est dans un bâti de palier 3. Le bâti de palier 3 comprend un corps de palier 31 creux formant une cavité interne 21 dans laquelle l'arbre 2 cylindrique est monté pivotant avec le corps de palier 31. Le rayon de l'arbre 2 et celui de la cavité interne 21 sont tels qu'un espace 4 est formé entre l'arbre 2 et le bâti de palier 3.

L'espace 4 entre l'arbre 2 et le bâti de palier 3 est rempli d'un fluide sous pression. Le fluide est injecté en continu entre la surface de l'arbre 20 et la surface interne 30 du bâti de palier 3 de manière à garder ces dernières séparées l'une de l'autre. L'arbre 2 peut être dans une position quelconque à l'intérieur du corps de palier 31. Cependant, dans le cas où la pression d'air dans la cavité interne 21 est exercée de manière uniforme sur l'arbre 2, l'arbre restera sensiblement concentrique avec le corps de palier 31 cylindrique.

Le corps de palier 31 peut comprendre une enveloppe 6 qui est imperméable au fluide et contenant le corps de palier 31. L'enveloppe 6 peut être séparée du corps de palier 31 par un espace. L'enveloppe 6 peut comprendre une entrée du fluide 5 qui peut être raccordé, par exemple, à une source du fluide, telle qu'un réservoir avec une pompe, un réservoir d'air comprimé, etc.

Le flux de fluide est injecté au travers une entrée, représenté par un canal 5 dans la figure 1. Le fluide injecté par l'entrée 5 passe à travers le corps de palier 31, rempli l'espace 4 entre l'arbre 2 et le corps de palier 31, et s'échappe ensuite dans l'atmosphère à l'extérieur du palier 1 par un restricteur de sortie 7 sur les côtés du bâti de palier 3. Le corps de palier 31 sert alors de restricteur d'entrée permettant de réguler la pression du fluide dans l'espace 4. A cette fin, le corps de palier 31 peut comprendre des canaux par lesquels le fluide passe. La pression du fluide dans l'espace 4 étant régulée par la taille des canaux et celle du restricteur de sortie 7.

Avantageusement, au moins une partie du corps de palier 31 est fabriquée dans un matériau poreux. Un choix judicieux de la taille et la géométrie des pores ainsi que la distribution des pores dans le corps de palier 31 permet le passage régulier du fluide sous pression à travers le corps de palier 31 et sur pratiquement toute la longueur du corps de palier 31. La totalité du corps de palier 31 peut également être fabriquée dans le matériau poreux.

Dans un mode de réalisation, le corps de palier 31 en matériau poreux est fabriqué à l'aide un procédé de fabrication additive.

Par exemple, un modèle du corps de palier 31 peut être réalisé à partir d'un fichier CAO (Conception Assistée par Ordinateur). Le modèle peut alors être décomposé en sections de couches bidimensionnelles de manière à définir chaque couche à déposer.

Le procédé de fabrication additive peut comprendre un procédé de fusion laser sélective (Selective Laser Melting - SLM). Le procédé SLM procède par ajout de matière couche par couche, de façon itérative. Chaque couche est déposée en utilisant un laser à puissance élevée et hautement focalisé balayant un lit de poudres métalliques de sorte à fondre localement le métal la poudre métallique. Le procédé est répété pour chaque couche, selon le modèle CAO. Le métal fond et se solidifie de nouveau de façon à former la structure souhaitée. La fabrication du corps de palier 31 par le procédé de fusion laser sélective peut, par exemple, être réalisée à l'aide d'un équipement fourni par la compagnie 3D Microprint GmbH.

Dans un autre mode de réalisation, le procédé de fabrication additive comprend un procédé de frittage sélectif au laser (ou "selective laser sintering" en anglais). Dans ce cas, l'énergie du faisceau laser est ajustée de manière à ce que les particules métalliques sont chauffées mais sans fondre. De la sorte, le dépôt métallique formé a une structure de type frittée et poreuse.

Dans le procédé de frittage sélectif au laser, les particules métalliques coalescent sans créer une zone de métal fondu. Le procédé de frittage sélectif au laser peut être avantageux pour la fabrication de composants en alliage. En effet, les différents métaux de l'alliage peuvent avoir différents points de fusion, pouvant résulter dans un composant moins stable lorsqu'il est fabriqué avec le procédé de fusion laser sélective. Dans le cas du procédé de fusion laser sélective d'alliages, il est préférable d'utiliser des métaux ayant un point de fusion proche.

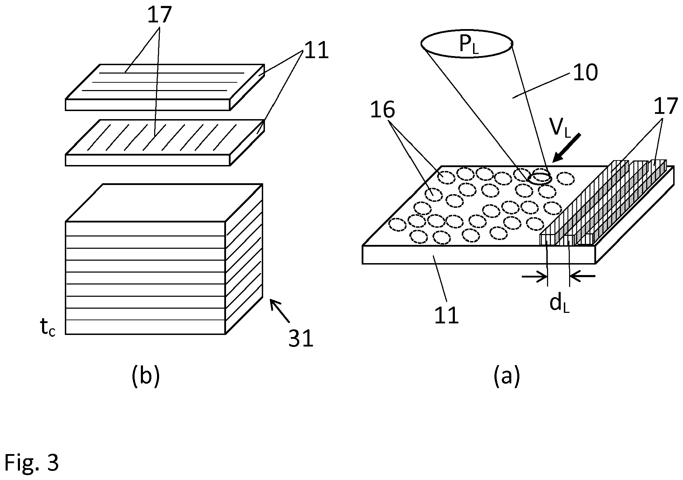

Les figures 3a et 3b représentent schématiquement un procédé de fusion laser sélective ou de frittage sélectif au laser dans lequel des couches 11 successives forment le corps de palier 31 (figure 3a). La figure 3b montre un faisceau laser 10 balayant un lit de poudres métalliques 16 de manière à les irradier (dans la figure, le sens de balayage est indiqué par la flèche) sur l'une des couches 11. Les particules métalliques fondues ou frittées par le faisceau laser 10 dans une couche ont représentées par les lignes (ou barres) 17. La direction de balayage du faisceau laser 10 peut être changée d'une couche 11 à l'autre, comme illustré pas les lignes 17 sur les deux couches représentées en éclaté dans la figure 3a. Le balayage du faisceau laser 10 peut être réalisé en trois dimensions à l'aide d'une table mobile en X-Y-Z, sur laquelle se trouvent les particules. Le balayage du faisceau laser 10 peut également être réalisé grâce à un bras portant un dispositif laser (non représenté) générant le faisceau laser 10. Dans ce cas, le balayage peut être réalisé selon deux, trois, quatre, cinq ou six axes.

Un système pour fabriquer un corps de palier 31 poreux selon la méthode de l'invention peut comprendre un dispositif laser générant un faisceau laser 10, un dispositif de balayage configuré de manière à balayer le faisceau laser 10 selon deux, trois, quatre, cinq ou six axes, des moyens pour fournir des particules destinées à être irradiées par le faisceau laser 10.

Un produit programme d'ordinateur comprenant un code de programme mémorisé sur un support lisible par machine, le code de programme étant configuré pour réaliser la méthode de l'invention lorsque le code de programme est exécuté dans le système.

Dans un mode de réalisation, la porosité est ajustée en variant au moins l'un des paramètres suivants ou une combinaison de ces paramètres: la puissance P_{L} du faisceau laser 10, la vitesse de balayage V_{b} du faisceau laser 10, la distance d_{L} entre deux lignes 17 et l'épaisseur t_{c} de la couche 11 déposée. Par exemple, dans le cas de particules d'acier inoxydable (1.4542), la puissance P_{L} du faisceau laser 10 peut être variée entre 195 W et 70 W, la vitesse de balayage V_{b} du faisceau laser 10 peut être variée entre 1000 et 4500 mm/s, la distance d_{L} entre deux lignes 17 peut être variée entre 100 à 1 mm et l'épaisseur t_{c} de la couche 11 peut être variée entre 10 µm et 100 µm. Par exemple, une porosité traversante peut être obtenue pour une vitesse de balayage V_{b} du faisceau laser 10 au-dessus de 3000 mm/s. Une distance d_{L} entre deux lignes 17 permet d'obtenir des pores traversants d'une taille supérieure à 100 µm.

La porosité peut également être ajustée en variant au moins l'un des paramètres suivants ou une combinaison de ces paramètres: la puissance du laser, l'épaisseur de la couche déposée, le diamètre du faisceau laser, la vitesse de balayage du laser ou le temps de fusion.

Dans un autre mode de réalisation, chaque couche est formée avec une structure tridimensionnelle. La succession des couches ainsi formées permet d'obtenir le corps de palier 31 avec des pores traversants.

Encore dans un autre mode de réalisation, le procédé de frittage sélectif au laser est mis en oeuvre avec un substrat, immergé dans un liquide comprenant des particules de métal en suspension. Le liquide circule le long du substrat dans une direction et un faisceau laser est dirigé au travers le liquide, vers la surface du substrat. Les particules localement irradiées par le faisceau laser absorbent l'énergie du laser et s'agglomèrent, formant ainsi un dépôt métallique à la surface du substrat.

Les particules métalliques peuvent avoir une taille de l'ordre d'une dizaines de microns, par exemple entre 10 µm et 30 µm et jusqu'à quelques mm. Les particules métalliques peuvent être dans un métal pur ou dans un alliage, tel que l'acier inoxydable, un bronze, un alliage de cuivre ou de nickel.

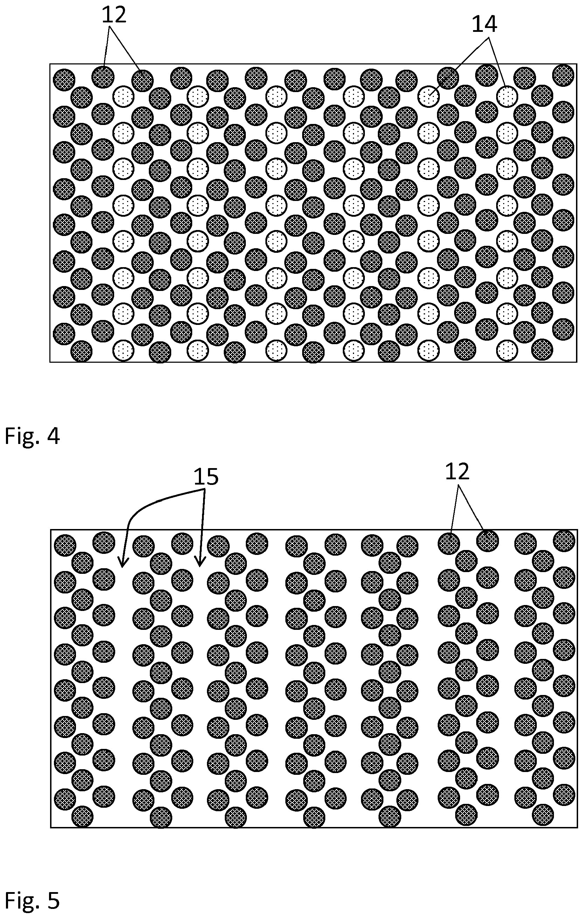

Encore dans un autre mode de réalisation illustré aux figures 4 et 5, le corps de palier 31 poreux est fabriqué à l'aide d'un procédé de fusion laser sélective dans lequel des particules d'un premier métal 12 sont formées de manière à former la structure du corps de palier 31. Des particules d'un second métal 14 sacrificiel sont également formées de manière alternée avec les particules d'un premier métal 12 (figure 4). Une fois la déposition terminée, la second métal 14 est éliminé de manière à former des pores 15 traversants, comme montré à la figure 5.

Le second métal 14 peut être un métal plus anodique que le premier métal 12. Après l'étape de déposition, la structure est mise dans une solution qui dissous les particules du deuxième métal 14.

Par exemple, les particules du premier métal 12 peuvent être déposées dans un alliage de Al 98%/Cu 2% et les particules du second métal 14 peuvent être déposées en aluminium pur. La petite quantité de cuivre du premier métal rendent les particules du premier métal 12 plus cathodiques que celle du second métal 14 de sorte que les particules en aluminium pur 14 sont dissoutes préférentiellement et sélectivement dans une solution d'attaque chimique. Après dissolution, on obtient un matériau poreux.

Dans un autre exemple, les particules du premier métal 12 sont déposées en cuivre pur et les particules du second métal 14 sont déposées dans un alliage de cuivre comprenant de l'aluminium (par exemple Cu 98% / Al 2%). Encore dans un autre exemple, les particules du premier métal 12 sont déposées dans un alliage de cuivre comprenant de l'argent (par exemple Cu 97% /Ag 3%)et les particules du second métal 14 sont déposées en cuivre pur.

L'alliage composant les particules du premier métal 12 peuvent être un alliage de cuivre, par exemple un bronze, de nickel ou tout autre alliage métallique. Les particules du second métal seront composées d'un alliage plus anodique.

D'autres procédés de fabrication additive peuvent être envisagés sans sortir du cadre de l'invention. Par exemple, le procédé de fabrication additive comprend un procédé de déposition par fil en fusion dans lequel un métal est amené sous forme liquide au travers d'une buse de manière à former une couche de la pièce à fabriquer, la fabrication par faisceau d'électrons, la stéréolithographie, la fusion par projection de poudre, la polymérisation ou réticulation par ultra-violet (UV).

Ces procédés de fabrication additive permettent de produire le corps de palier 31 en matériau poreux comprenant des pores traversants ayant une géométrie contrôlée. Les pores peuvent avoir un diamètre de l'ordre de 5 µm et jusqu'à plusieurs mm, par exemple entre 5 µm et 500 µm ou entre 20 µm et 200 µm. La porosité (ou la densité des pores) peut également être contrôlée, par exemple en ajustant la taille des particules 12, 14 dans le dernier exemple.

Le procédé de fabrication peut être adapté de sorte à ce que le type de porosité varie le long de la longueur du corps de palier 31, par exemple, la porosité ou la géométrie de la porosité. Par exemple, le corps de palier 31 peut comprendre une section comportant une porosité et une autre section sans porosité.

Le procédé de fabrication peut être adapté de sorte à ajuster les propriétés mécaniques du corps de palier 31. Par exemple, la dureté du corps de palier 31 peut être plus élevée sur une portion que sur une autre. La portion du corps de palier 31 ayant une dureté plus élevée peut être celle comprenant les pores.

Selon une autre caractéristique de l'invention, la matière du corps du palier est un matériau présentant de bonnes propriétés tribologiques, une bonne résistance mécanique, une dureté élevée, une bonne résistance à la corrosion et une adhésion minimisée. Par exemple, la matière du corps du palier peut comprendre préférablement un métal ou un alliage métallique, une matière frittée comprenant un métal, un acier inoxydable, un bronze. Le bronze permet d'obtenir un corps de palier solide et résistant ayant une durée de vie plus longue et d'une bonne résistance aux chocs, aux impacts, à l'usure et à la corrosion. L'acier inoxydable présentent une capacité de charge élevée et une très bonne résistance à la fatigue et aux températures élevées. La matière du corps du palier peut également comprendre une combinaison de plusieurs métaux et/ou alliages, telle qu'un acier/bronze ou un matériau composite pouvant comporter un métal ou alliage métallique avec un matériau céramique ou lubrifiant tel qu'un polymère (PTFE ou autre) ou du carbone. La matière du corps du palier peut également comprendre une matière synthétique ou en carbone, etc. Le corps de palier 31 peut également comporter plus d'un matériau.

Pour assurer une distribution efficace du fluide sous pression, les pores du corps du palier 31 peuvent avoir une section correspondant à un trou circulaire ayant un diamètre entre 1 µm et 5 mm, ou entre 1 µm à 500 µm, par exemple les pores peuvent avoir un diamètre entre 10 µm et 50 µm, ou encore entre 10 µm et 200 µm. Les pores peuvent également avoir un diamètre entre 2 µm et 10 µm ou entre 2 µm et 5 µm.

La densité des pores peut être uniforme sur toute la longueur du corps du palier 31. Alternativement, la densité des pores peut varier le long de la longueur du corps du palier 31. On peut également imaginer que le corps de palier 31 comporte des zones comprenant des pores et des zones non poreuses. Le corps de palier 31 peut comporter des motifs de porosité, par exemple, des régions poreuses, chaque région pouvant avoir une taille et une géométrie des pores ainsi qu'une distribution des pores qui peut différer des autres régions.

La méthode de fabrication additive permet de mieux contrôler la taille et une géométrie des pores ainsi que la distribution des pores sur le corps de palier 31, par rapport aux méthodes de fabrications conventionnelles.

La méthode de fabrication additive permet également d'obtenir des pores dont le rapport d'aspect (rapport hauteur/largeur) est plus grand que 5 ou 10 ou même 20, voire 100.

Il va de soi que la présente invention n'est pas limitée au modes de réalisations qui viennent d'être décrits et que diverses modifications et variantes simples peuvent être envisagées par l'homme de métier sans sortir du cadre de la présente invention.

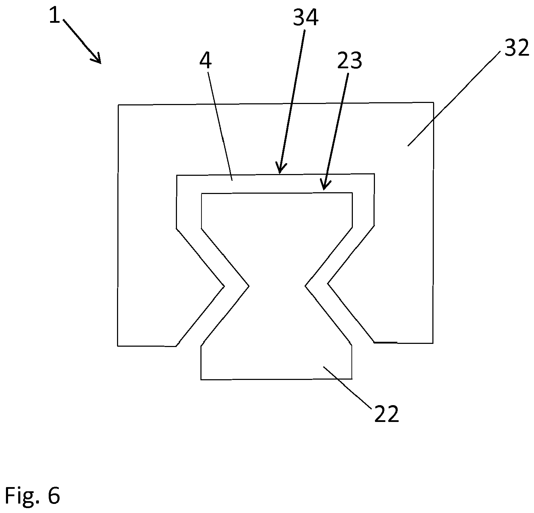

Par exemple, la méthode de fabrication peut être appliquée à la fabrication d'un corps de palier pour un palier aérostatique de type "ouvert", le palier 1 montré aux figures 1 et 2 étant de type "fermé". La figure 6 illustre un tel palier de type "ouvert" qui comprend un rail de guidage 22 guidant un chariot mobile 32 dans son mouvement linéaire, en translation, le long du rail 22. On notera que le palier peut comprendre d'autres configurations que celui de la figure 6. Par exemple, le palier peut être de type rond, semi-fermé ou plat, dans ce dernier cas, tel que ceux utilisés en métrologie. Dans cette configuration, le rail de guidage 22 peut être fabriqué entièrement ou en partie dans un matériau poreux avec la méthode de fabrication additive, telle que discuté ci-dessus. Dans un tel cas, le rail de guidage 22 joue le rôle du corps de palier 31 tel que décrit ci-dessus. Un espace 4 entre le rail 22 et le chariot mobile 32 peut alors être rempli d'un fluide sous pression. Le fluide est injecté en continu entre la surface 23 du rail 22 et la surface interne 34 du chariot mobile 32 de manière à garder ces dernières séparées l'une de l'autre. L'espace 4 entre le rail 22 et le chariot mobile 32 dépend de la pression entre la surface 23 du rail 22 et la surface interne 34 du chariot mobile 32 qui est conditionnée, entre autres, par la taille et la géométrie des pores ainsi que la distribution des pores dans le matériau poreux composant le rail 22.

L'invention concerne également un corps de palier 31 fabriqué avec la méthode de l'invention, ainsi qu'un palier aérostatique comprenant le corps de palier 31 comportant un corps poreux.

### Numéros de référence employés sur les figures

- 1: palier
- 10: faisceau laser
- 11: couche
- 12: particules d'un premier métal
- 14: particules d'un second métal
- 15: pore
- 16: poudres métalliques
- 17: particules métalliques fondues ou frittées, ligne
- 2: arbre
- 20: surface de l'arbre
- 21: cavité interne
- 22: rail de guidage
- 23: surface du rail
- 3: bâti de palier
- 30: surface interne du corps de palier
- 31: corps cylindrique, restricteur
- 32: chariot mobile
- 34: surface interne du chariot mobile
- 4: espace
- 5: entrée d'air
- 6: enveloppe
- 7: restricteur de sortie
- d_{L}: distance entre deux lignes
- P_{L}: puissance du faisceau laser
- t_{c}: épaisseur de la couche
- V_{b}: vitesse de balayage

## Revendications

1. Méthode de fabrication d'un corps de palier (31) pour un palier aérostatique, le corps de palier comprenant une porosité traversante contrôlée permettant le passage d'un fluide sous pression,
**caractérisée en ce que**
le corps de palier (31) est fabriqué par un procédé de fabrication additive; et **en ce que**
le corps du palier (31) est fabriqué dans un matériau comprenant un métal ou un alliage métallique.

2. La méthode selon la revendication 1,
dans laquelle le procédé de fabrication additive comprend un procédé de fusion laser sélective, un procédé de frittage laser direct ou un procédé de déposition de fil en fusion, la stéréolithographie, la fusion par projection de poudre ou la polymérisation et réticulation par ultra-violet (UV).

3. La méthode selon la revendication 2,
dans laquelle la porosité est ajustée en variant au moins l'un des paramètres suivants ou une combinaison de ces paramètres: la puissance du laser, le diamètre du faisceau laser, l'épaisseur de la couche déposée, la vitesse de balayage du faisceau laser.

4. La méthode selon la revendication 2,
comprenant une étape de former une succession de couches, chaque couche formant une structure tridimensionnelle de sorte que la succession de couches forme des pores traversants.

5. La méthode selon l'une des revendications 2 à 4,
comprenant une étape de former une succession de couches, chaque couche comprenant la formation de particules (12) d'un premier métal et la formation de particules d'un second métal (14) plus anodique que le premier métal (12); et
une étape de dissolution des particule du second métal (14) de manière à obtenir le corps de palier (31) poreux.

6. La méthode selon l'une des revendications 1 à 5,
dans laquelle le corps de palier (31) est fabriqué dans un alliage de cuivre, un alliage de bronze ou en acier inoxydable.

7. La méthode selon l'une des revendications 1 à 6,
dans laquelle ledit matériau comprend une pluralité de métaux et/ou d'alliages ou un matériau composite.

8. La méthode selon l'une des revendications 1 à 7,
dans laquelle les pores du corps de palier (31) ont une taille de l'ordre de 1 µm et jusqu'à 5 mm.

9. La méthode selon l'une des revendications 1 à 8,
dans laquelle les pores du corps de palier (31) ont une taille entre 1 µm et 500 µm ou entre 10 µm et 200 µm.

10. La méthode selon l'une des revendications 1 à 9,
dans laquelle les pores ont un rapport d'aspect plus grand que 10 ou 100.

11. La méthode selon l'une des revendications 1 à 10,
dans laquelle la porosité est variée le long d'une dimension du corps de palier (31).

12. La méthode selon la revendication 11,
dans laquelle le corps de palier (31) est fabriqué de sorte à ce qu'une portion du corps de palier (31) comprend une porosité et une autre portion est non-poreuse.

13. Système pour fabriquer un corps de palier (31) poreux selon la méthode selon l'une des revendications 1 à 12, comprenant un dispositif laser générant un faisceau laser (10), un dispositif de balayage configuré de manière à balayer le faisceau laser (10) selon deux, trois, quatre, cinq ou six axes, des moyens pour fournir des particules destinées à être irradiées par le faisceau laser (10).

14. Produit programme d'ordinateur comprenant un code de programme mémorisé sur un support lisible par machine, le code de programme étant configuré pour réaliser la méthode selon l'une des revendications 1 à 12 lorsque le code de programme est exécuté dans le système.

15. Corps de palier (31) fabriqué avec la méthode selon l'une des revendications 1 à 12.

16. Palier aérostatique comprenant le corps de palier (31) selon la revendication 15.
